# EUROPÄISCHE PATENTSCHRIFT

(11) **EP 0 532 031 B1**
(45) Veröffentlichungstag und Bekanntmachung des Hinweises auf die Patenterteilung: **14.02.1996**
(21) Anmeldenummer: 92115582.6
(22) Anmeldetag: 11.09.1992
(51) Int. Cl.: F01N 3/02

(54) **Vorrichtung zur thermischen Regeneration von Partikelfiltern für Dieselmotorenabgas**
Device for the thermal regeneration of diesel engine exhaust particle filters
Dispositif pour la régénération thermique de filtres à particules pour les gaz d'échappement de moteurs diesel

(30) Priorität: 12.09.1991 DE 4130378
(43) Veröffentlichungstag der Anmeldung: 17.03.1993
(73) Patentinhaber: Firma J. Eberspächer, D-73730 Esslingen (DE)
(72) Erfinder: Langen, Herbert, W-7305 Altbach (DE)
(74) Vertreter: Klunker . Schmitt-Nilson . Hirsch

(56) Entgegenhaltungen:
- EP-A- 0 218 047
- EP-A- 0 306 743
- DE-A- 3 829 491
- DE-A- 3 834 850
- US-A- 4 567 725

## Beschreibung

Die Erfindung bezieht sich auf eine Vorrichtung zur thermischen Regeneration von Partikelfiltern für Dieselmotorenabgas, aufweisend:
- (a): einen Brenner zum Aufheizen des Partikelfilters während dessen Regeneration;
- (b): eine Einrichtung zur Versorgung des Brenners mit Verbrennungsluft; und
- (c): eine derart ausgelegte Brennstoffpumpeneinrichtung zur Versorgung des Brenners mit Brennstoff, daß sie eine von der Drehzahl des Dieselmotors, dem der Partikelfilter zugeordnet ist, abhängige Brennstoffmenge pro Zeiteinheit liefert.

Eine derartige Vorrichtung ist aus dem Dokument EP-A-0 306 743 bekannt. Dort wird der Brennstoff für den Regenerationsbrenner mittels einer Verdrängerpumpe gefördert, die von der Kurbelwelle des Dieselmotors drehzahlabhängig angetrieben wird.

Zur Zeit werden vielerorts Anstrengungen unternommen, Vorrichtungen zum Entfernen von Partikeln - häufig vereinfachend als "Ruß" oder "Rußpartikel" bezeichnet - aus Dieselmotorenabgas zu entwickeln. Während bisher nahezu bei allen Dieselmotoren die Abgase mitsamt der Partikel unbehandelt in die Umgebung abgegeben wurden, strebt man jetzt - primär aus Umweltschutzgründen - an, die Partikel mindestens großenteils aus den Dieselmotorenabgasen abzufangen, ehe diese ins Freie geblasen werden. Zum Abfangen der Partikel sind in den Abgasleitungen installierte Partikelfilter ein geeignetes Mittel, wobei man heute in erster Linie an keramische Monolithfilter und Keramikgarn-Wickelfilter denkt.

Das größte Problem ist die Beseitigung der ausgefilterten Partikel. Da bei Kraftfahrzeugdieselmotoren die Filter bereits nach einer Fahrstrecke von höchstens einigen hundert Kilometern vollständig mit Partikeln beladen sind, ist ein Austauschen eines beladenen Filters jeweils gegen einen neuen Filter keine unter praktischen Gesichtspunkten realistische Möglichkeit. Infolgedessen konzentrieren sich die Bemühungen darauf, Möglichkeiten für eine Regeneration beladener Dieselmotorenabgas-Partikelfilter zu finden. Die erfolgversprechendste Möglichkeit ist die thermische Regeneration durch Abbrennen der im beladenen Filter ausgefilterten Partikel. Hierfür sind jedoch während der Regeneration im Bereich des Filters Temperaturen von mindestens 600°C erforderlich. Derartige Temperaturen herrschen im Abgas bestenfalls bei Vollastbedingungen oder bei Lastzuständen des Dieselmotors relativ nahe bei Vollast, so daß dann, wenn der Filter regenegierungsbedürftig ist und Bedingungen dieser Art nicht herrschen, der Filter durch eine andere Wärmequelle auf die erforderliche Regenerationstemperatur gebracht werden muß.

Der Erfindung liegt die Aufgabe zugrunde, eine Vorrichtung der eingangs genannten Art verfügbar zu machen, mit der sich günstige Regenerationsbedingungen auch bei wechselnden Betriebszuständen des Dieselmotors, dessen Abgas gefiltert werden soll, erreichen lassen.

Zur Lösung dieser Aufgabe ist die Vorrichtung erfindungsgemäß dadurch gekennzeichnet,
- (d): daß die Brennstoffpumpeneinrichtung mehrere Brennstoffpumpen aufweist, die jeweils eine von der der Drehzahl des Dieselmotors abhängige Fördermenge pro Zeiteinheit haben;
- (e): und daß die Anzahl der gerade in Betrieb befindlichen Brennstoffpumpen mindestens in Abhängigkeit von dem Lastzustand des Dieselmotors gesteuert ist.

Die mittels des Brenners dem Partikelfilter zuzuführende Wärmemenge pro Zeiteinheit hängt in erster Linie von der Abgasmenge des Dieselmotors pro Zeiteinheit ab. Diese Abgasmenge ist im wesentlichen proportional der Drehzahl des Dieselmotors. Insofern ist es günstig, wenn die Fördermengen der Brennstoffpumpen im wesentlichen proportional der Drehzahl des Dieselmotors sind.

Die geschilderte Abhängigkeit bzw. Proportionalität der Brennstoffördermenge von bzw. zu der Drehzahl des Dieselmotors läßt sich dadurch erreichen, daß man die Brennstoffpumpen mechanisch von dem Dieselmotor antreibt oder daß man elektrisch mit variabler Drehzahl angetriebene Brennstoffpumpen vorsieht. In Weiterbildung der Erfindung ist jedoch bevorzugt, daß die Brennstoffpumpen elektromagnetisch angetriebene Dosierpumpen sind. Elektromagnetisch angetriebene Dosierpumpen sind vergleichsweise einfach aufgebaut und robust; sie lassen sich besonders einfach in ihrer Fördermenge durch Änderung der Antriebsfrequenz steuern. Außerdem lassen sich auf einfache Weise weitere Parameter außer der Drehzahl des Dieselmotors berücksichtigen. Hierzu werden weiter unten noch genauere Ausführungen gemacht.

Da mehrere Brennstoffpumpen vorhanden sind, deren Fördermengen zusammengeführt dem Brenner zugeführt werden, muß der erforderliche Gesamtfördermengenbereich nicht mit einer einzigen Brennstoffpumpe abgedeckt werden, sondern man kann beispielsweise ab einer oder mehreren Fördermengenschwellen eine zweite, dritte etc. Brennstoffpumpe zuschalten. Außerdem ist es bei Vorhandensein mehrerer Brennstoffpumpen auf einfache Weise möglich, weitere Parameter des momentanen Betriebszustands des Dieselmotors zu berücksichtigen, wie weiter unten noch genauer ausgeführt wird.

Vorzugsweise weist in Weiterbildung der Erfindung die Einrichtung zur Versorgung des Brenners mit Verbrennungsluft eine(n) derart ausgelegte(n) Kompressor bzw. Luftpumpe bzw. ein derart ausgelegtes Gebläse auf, daß er eine von der Drehzahl des Dieselmotors, dem der Partikelfilter zugeordnet ist, abhängige, vorzugsweise der Drehzahl im wesentlichen proportionale, Verbrennungsluftmenge pro Zeiteinheit liefert. Diese Maßnahme ist entbehrlich, wenn die Einrichtung zur Versorgung des Brenners mit Verbrennungsluft stets so viel Verbrennungsluft liefert, daß auch bei maximaler erforderlicher Brennstoffzufuhr zu dem Brenner genügend Verbrennungsluft zur Regeneration vorhanden ist. Es ist jedoch energetisch günstiger, wenn man - wie beschrieben und vorzugsweise vorgesehen - die Verbrennungsluftmenge pro Zeiteinheit mindestens grob auf die Drehzahl des Dieselmotors abstimmt.

Zu diesem Zweck kann der Kompressor mechanisch von dem Dieselmotor angetrieben sein. Eine andere Möglichkeit ist das elektrische, variable Antreiben des Kompressors.

Es gibt Regenerationssituationen, bei denen es günstig ist, nicht an die beschriebene strenge Abhängigkeit der von dem Kompressor gelieferten Verbrennungsluftmenge von der Drehzahl des Dieselmotors gebunden zu sein. Als Beispiele seien der Beginn einer Regeneration mit möglichst raschem Aufheizen des Partikelfilters (also tendenziell möglichst weitgehende Reduktion der Verbrennungsluftmenge), hoher Lastzustand des Dieselmotors (also Dieselmotorenabgas relativ heiß, relativ geringe Wärmezufuhr mittels des Brenners erforderlich) und niedriger Lastzustand des Dieselmotors (also Dieselmotorenabgas relativ kalt, relativ große Wärmezufuhr mittels des Brenners erforderlich, aber noch erheblicher Luftanteil im Dieselmotorenabgas) genannt. Vorzugsweise ist zur Abstimmung auf derartige Situationen ein steuerbares Ventil zwischen dem Kompressor und dem Brenner zum Steuern der dem Brenner zuströmenden Verbrennungsluftmenge pro Zeiteinheit vorgesehen.

Beispiele für hohen Lastzustand des Dieselmotors sind kräftiges Beschleunigen aus niedrigen Drehzahlen heraus, Vollast bei hohen Drehzahlen, das Befahren von Steigungen mit einem mit dem Dieselmotor ausgerüsteten Kraftfahrzeug. Beispiele für niedrigen Lastzustand des Dieselmotors sind das Befahren von Gefällen, das Fahren mit gleichmäßiger gemäßigter Geschwindigkeit und wenig gedrücktem Fahrpedal sowie Leerlauf des Dieselmotors.

Die erfindungsgemäße Vorrichtung weist mehrere Brennstoffpumpen auf, wobei mindestens in Abhängigkeit von dem Lastzustand des Dieselmotors die Anzahl der gerade in Betrieb befindlichen Brennstoffpumpen gesteuert ist. Hiermit hat man also ein weiteres Mittel zur Änderung der von der Brennstoffpumpeneinrichtung gelieferten Brennstoffmenge pro Zeiteinheit zur Verfügung. Vorstehend ist ausgeführt worden, wie es konkret zu Änderungen des Lastzustands des Dieselmotors kommt. Geänderte Lastzustände hängen nicht notwendigerweise mit geänderter Drehzahl zusammen, auch wenn beides zuweilen Hand in Hand geht. Vielmehr können bei ein und derselben Drehzahl je nach Antriebsanforderungen des Dieselmotors unterschiedliche Lastzustände herrschen.

Ziel einer optimalen Regeneration von Partikelfiltern ist die möglichst rasche Erreichung der erforderlichen Rußabbrenntemperatur im Bereich des Partikelfilters zu Beginn der Regeneration und die möglichst genaue Einhaltung einer nicht viel über dieser Mindesttemperatur liegenden Temperatur unabhängig von der momentanen Drehzahl und dem momentanen Lastzustand des Dieselmotors. Die Erfindung offenbart die Mittel, dieses Ziel zu erreichen. In ihrer Ausführungsform mit besonders großem Funktionsumfang wird Einfluß genommen auf die dem Brenner zuströmende Verbrennungsluftmenge pro Zeiteinheit (drehzahlabhängig und nicht-drehzahlabhängig) und auf die dem Brenner zugeführte Brennstoffmenge pro Zeiteinheit (drehzahlabhängige Beeinflussung der Förderleistung mehrerer Brennstoffpumpen, nicht-drehzahlabhängige Verstellung der Förderleistung einer Brennstoffpumpe oder der Anzahl der in Betrieb befindlichen Brennstoffpumpen).

Vorzugsweise ist die Vorrichtung durch eine elektrische Steuerung gekennzeichnet, die während des Betriebs des Brenners in Abhängigkeit von der Gastemperatur im Bereich des Partikelfilters Einfluß nimmt auf die Anzahl der gerade in Betrieb befindlichen Brennstoffpumpen und/oder die Fördermenge der Brennstoffpumpen und/oder die Stellung des Verbrennungsluftmengen-Ventils. Der Ausdruck "Einfluß nimmt" wurde gewählt, um zum Ausdruck zu bringen, daß die genannte Steuerung der Grundsteuerung über die Drehzahl des Dieselmotors überlagert sein kann. Es ist jedoch auch möglich, daß die genannte Steuerung die Gesamtsteuerung übernimmt; in diesem Fall steuert die Steuerung vorzugsweise auch die Einrichtung zur Versorgung des Brenners mit Verbrennungsluft hinsichtlich der von ihr gelieferten Verbrennungsluftmenge pro Zeiteinheit.

Die erfindungsgemäße Vorrichtung ist vorzugsweise für ein Vollstrom-Regenerationssystem vorgesehen, bei dem während der brennerunterstützten Filterregeneration die Verbrennungsgase des Brenners das Motorabgas auf die Regenerationstemperatur aufheizen. Diese Ausbildung hat den Vorteil, besonders unkompliziert und unaufwendig zu sein. Andererseits muß hierfür eine relativ hohe Maximal-Brennerleistung installiert werden, weil der gesamte Motorabgasstrom auf die Regenerationstemperatur aufgeheizt werden muß. Außerdem muß der Kompressor einen oberhalb des Motorabgasdrucks liegenden Verbrennungsgasdruck des Brenners sicherstellen. Auch bei der Vollstrom-Regeneration wird normalerweise mit Filterregeneration in Intervallen gearbeitet, d.h. es wird dann regeneriert, wenn der Filter vollständig oder nahezu vollständig beladen ist.

Die erfindungsgemäße Vorrichtung kann auch für ein zweiflutiges Intervall-Regenerationssystem ausgebildet sein, bei dem zwei parallelgeschaltete Filter und eine Klappe zum wahlweisen Leiten des Motorabgases in den ersten oder in den zweiten Filter vorgesehen sind und bei dem für jeden Filter ein eigener Brenner vorgesehen ist. Bei dieser Ausbildung wird dann, wenn einer der beiden Filter vollständig oder nahezu vollständig beladen ist, das Motorabgas mittels der Klappe zu dem anderen Filter geleitet und wird der erstgenannte Filter thermisch regeneriert. Wenn dann nach weiterer Betriebszeit der andere Filter vollständig oder nahezu vollständig beladen ist, wird umgekehrt vorgegangen.

Die erfindungsgemäße Vorrichtung ist primär für Antriebs-Dieselmotoren von Kraftfahrzeugen bestimmt.

Die Erfindung und Ausgestaltungen der Erfindung werden nachfolgend anhand eines zeichnerisch schematisiert dargestellten Ausführungsbeispiels noch näher erläutert.

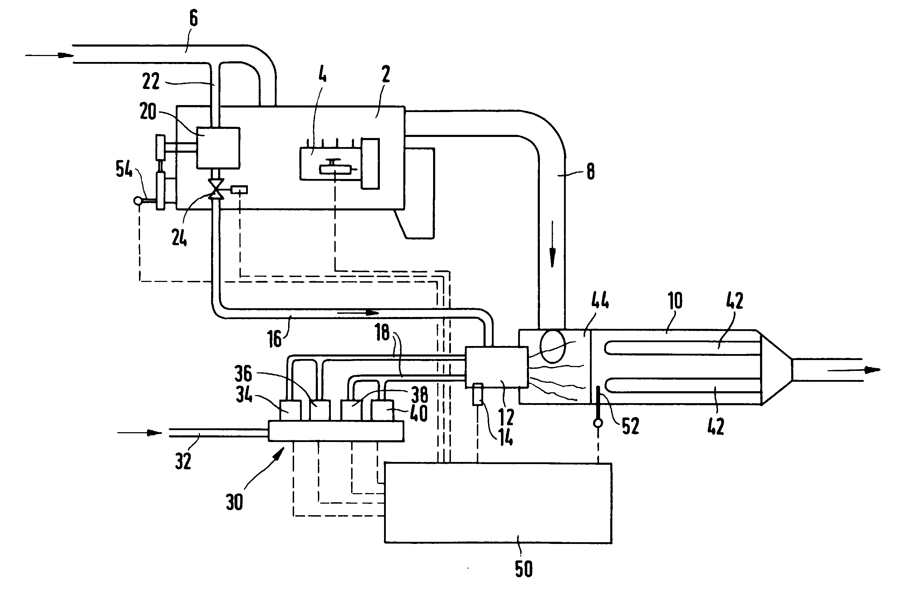

Die einzige Zeichnungsfigur zeigt einen Kraftfahrzeug-Dieselmotor mit einem Partikelfilter für sein Abgas und mit einer Vorrichtung zur thermischen Regeneration des Partikelfilters.

In der Zeichnung ist schematisiert und ein in seinem Größenverhältnis zu den anderen Bauteilen verkleinert gezeichneter Dieselmotor 2 eingezeichnet. Der Dieselmotor 2 weist eine von ihm angetriebene Einspritzpumpe 4 für Dieselkraftstoff in seine Verbrennungsräume auf. Dem Dieselmotor 2 wird durch eine Ansaugleitung 6 Verbrennungsluft zugeführt, entweder durch Selbstansaugen oder mittels eines Laders. In eine Abgasleitung 8 des Dieselmotors 2 ist ein Partikelfilter 10 eingebaut.

Stirnseitig und mit der Längsachse des Partikelfilters 10 fluchtend ist an den Partikelfilter ein Brenner 12 angebaut. Der Brenner 12 besteht im wesentlichen aus einer Brennkammer und einer elektrischen Zündeinrichtung 14. Dem Brenner 12 wird Verbrennungsluft durch eine Leitung 16 zugeführt und Brennstoff, z.B. Dieselöl, durch eine Doppelleitung 18 zugeführt.

An den Dieselmotor 2 ist ein Kompressor 20 angebaut, der mechanisch beispielsweise von der Kurbelwelle oder der Nockenwelle des Dieselmotors 2 antreibbar ist. Der Kompressor 20 saugt über eine Leitung 22 Luft aus der Ansaugleitung 6 des Dieselmotors 2 an und ist ausgangsseitig an die Verbrennungsluftleitung 16 angeschlossen. In der Leitung 16 sitzt ein elektrisch verstellbares Ventil 24.

Ferner ist eine Brennstoffpumpeneinrichtung 30 vorgesehen, die eingangsseitig über eine Leitung 32 mit dem Brennstofftank des Kraftfahrzeugs verbunden ist und die ausgangsseitig mit der Doppel-Brennstoffleitung 18 verbunden ist. Die Brennstoffpumpeneinrichtung 30 besteht im wesentlichen aus vier elektromagnetisch angetriebenen Dosierpumpen 34, 36, 38, 40, die eingangsseitig alle an die Leitung 32 angeschlossen sind und von denen je zwei an eine gemeinsame Brennsstoffleitung 18 angeschlossen sind.

In einem Großteil des Gehäuses des Partikelfilters 10 ist ein Filterelement oder sind räumlich verteilt mehrere Filterelemente 42 angeordnet. Stromaufwärts der Filterelemente 42 ist in dem Gehäuse des Partikelfilters 10 ein Raum 44 vorhanden, in den die Brennkammer des Brenners 12 stirnseitig und die Abgasleitung 8 vom Umfang her, vorzugsweise mit Tangentialkomponente, münden.

Ferner ist eine elektrisches bzw. elektronisches Steuergerät 50 eingezeichnet. An das Steuergerät 50 sind angeschlossen:
- (a): ein Temperaturfühler 52, der die Gastemperatur in dem Partikelfilter 10, konkret im Bereich der Filterelemente 42, erfaßt;
- (b): ein Drehzahlsensor 54, der beispielsweise an der Kurbelwelle die Drehzahl des Dieselmotors 2 erfaßt;
- (c): die Einspritzpumpe 4 des Dieselmotors 2 zur Übermittlung eines oder mehrerer Werte, die den Lastzustand des Dieselmotors 2 repräsentieren;
- (d): die elektrische Zündeinrichtung 14 der Brennkammer 12;
- (e): die Brennstoffpumpen 34, 36, 38, 40;
- (f): das Ventil 24.

Zunächst wird die Hauptphase der Regeneration, also nach Abschluß des anfänglichen Aufheizvorgangs, beschrieben. Das Ventil 24 ist beispielsweise ganz offen. Der Kompressor 20 liefert eine im wesentlichen der Drehzahl des Dieselmotors 2 proportionale Verbrennungsluftmenge pro Zeiteinheit in den Brenner 12. Es sind beispeilsweise zwei der vier Brennstoffpumpen 34, 36, 38, 40 in Betrieb, und diese werden von dem Steuergerät 50 so angesteuert, daß sie eine im wesentlichen der Drehzahl des Dieselmotors 2 proportionale Brennstoffmenge pro Zeiteinheit an den Brenner 12 liefern. Infolgedessen ergibt sich am Brenner 2 im wesentlichen ein drehzahlunabhängiges, konstantes Brennstoff/Luft-Verhältnis.

Dieser "Grundsteuerung" ist überlagert eine Steuerung mittels des Steuergeräts 50, die den momentanen Lastzustand des Dieselmotors 2 berücksichtigt. Diese überlagerte Steuerung kann darin bestehen, daß die Antriebsfrequenz der beiden in Betrieb befindlichen Brennstoffpumpen modifiziert wird und/oder daß bedarfsweise eine Brennstoffpumpe außer Betrieb genommen wird oder eine oder zwei zusätzliche Brennstoffpumpen in Betrieb genommen werden.

Die Steuerung bzw. Regelung steht unter dem übergeordneten Einfluß der durch den Temperaturfühler 52 erfaßten Temperatur im Partikelfilter 10. Das Steuergerät bzw. Regelgerät 50 bemißt die dem Brenner 12 pro Zeiteinheit zugeführte Brennstoffmenge so, daß diese Temperatur stets im Bereich von etwa 650°C - 700°C gehalten wird.

Beim Starten einer Regeneration ist es günstig, den Partikelfilter möglichst rasch auf seine Arbeitstemperatur im Bereich von etwa 650°C bis 700°C zu bringen. Zu diesem Zweck kann das Steuergerät 50 das Ventil 24 teilweise schließen und/oder die Brennstoffördermenge höher fahren als es in der weiter vorne beschriebenen, späteren Phase der Regeneration in Abhängigkeit von der Drehzahl und dem Lastzustand des Dieselmotors 2 geschehen würde.

Es versteht sich, daß das Steuergerät 50 auch steuert, wann mit einer Regeneration zu beginnen ist (beispielsweise aufgrund des mittels eines Drucksensors im Partikelfilter 10 erfaßten Rückstaudrucks infolge beladener Filterelemente 42) und wann die Regeneration beendet ist (beispielsweise nach einer aus Erfahrungswerten bestimmten Zeitdauer). Es versteht sich ferner, daß das Steuergerät 50 das Einschalten der Zündeinrichtung 14 steuert.

Einzelne der beschriebenen Funktionen können auch aus dem Steuergerät 50 ausgegliedert sein. So kann beispielsweise die Arbeitsfrequenz jeder der Brennstoffpumpen 34, 36, 38, 40 unmittelbar aufgrund des von dem Drehzahlsensor 54 ermittelten Werts gesteuert werden oder kann der an der Einspritzpumpe 4 ermittelte, für den Lastzustand des Dieselmotors 2 repräsentative Wert oder die Gruppe von Werten unmittelbar auf die Brennstoffpumpeneinrichtung zur Steuerung der Anzahl der zu betreibenden Brennstoffpumpen gegeben werden.

## Patentansprüche

1. Vorrichtung zur thermischen Regeneration von Partikelfiltern (10) für Dieselmotorenabgas, aufweisend:
(a) einen Brenner (12) zum Aufheizen des Partikelfilters (10) während dessen Regeneration;
(b) eine Einrichtung (20) zur Versorgung des Brenners (12) mit Verbrennungsluft; und
(c) eine derart ausgelegte Brennstoffpumpeneinrichtung (30) zur Versorgung des Brenners (12) mit Brennstoff, daß sie eine von der Drehzahl des Dieselmotors (2), dem der Partikelfilter (10) zugeordnet ist, abhängige Brennstoffmenge pro Zeiteinheit liefert,
**dadurch gekennzeichnet**,
(d) daß die Brennstoffpumpeneinrichtung (30) mehrere Brennstoffpumpen (34; 36; 38; 40) aufweist, die jeweils eine von der Drehzahl des Dieselmotors (2) abhängige Fördermenge pro Zeiteinheit haben;
(e) und daß die Anzahl der gerade in Betrieb befindlichen Brennstoffpumpen (34; 36; 38; 40) mindestens in Abhängigkeit von dem Lastzustand des Dieselmotors (2) gesteuert ist.

2. Vorrichtung nach Anspruch 1,
**dadurch gekennzeichnet**,
daß die Brennstoffpumpen (34; 36; 38; 40) jeweils eine im wesentlichen der Drehzahl des Dieselmotors (2) proportionale Fördermenge haben.

3. Vorrichtung nach Anspruch 1 oder 2,
**dadurch gekennzeichnet**,
daß die Brennstoffpumpen (34; 36; 38; 40) elektromagnetisch angetriebene Dosierpumpen sind.

4. Vorrichtung nach einem der Ansprüche 1 bis 3,
**dadurch gekennzeichnet**,
daß die Einrichtung zur Versorgung des Brenners mit Verbrennungsluft einen derart ausgelegten Kompressor (20) aufweist, daß er eine von der Drehzahl des Dieselmotors (2), dem der Partikelfilter (10) zugeordnet ist, abhängige Verbrennungsluftmenge liefert.

5. Vorrichtung nach Anspruch 4,
**dadurch gekennzeichnet**,
daß die gelieferte Verbrennungsluftmenge im wesentlichen proportional der Drehzahl des Dieselmotors (2) ist.

6. Vorrichtung nach einem der Ansprüche 4 und 5,
**dadurch gekennzeichnet**,
daß der Kompressor (20) in mechanischer Antriebsverbindung mit dem Dieselmotor (2) ist.

7. Vorrichtung nach einem der Ansprüche 1 bis 6,
**gekennzeichnet durch** ein steuerbares Ventil (24) zum Steuern der dem Brenner (12) zuströmenden Verbrennungsluftmenge pro Zeiteinheit.

8. Vorrichtung nach einem der Ansprüche 1 bis 7,
**gekennzeichnet** durch eine elektrische Steuerung (50), die während des Betriebs des Brenners (12) in Abhängigkeit von der Gastemperatur im Bereich des Partikelfilters (10) Einfluß nimmt auf die Anzahl der gerade in Betrieb befindlichen Brennstoffpumpen (34, 36, 38, 40) und/oder die Fördermenge der Brennstoffpumpen (34; 36; 38; 40) und/oder die Stellung des Verbrennungsluftmengen-Ventils (24).

## Claims

1. An apparatus for the thermal regeneration of particle filters (10) for diesel engine exhaust gas, having:
a) a burner (12) for heating up the particle filter (10) during the regeneration thereof;
b) a device (20) for supplying the burner (12) with combustion air; and
c) a fuel pumping device (30) for supplying the burner (12) with fuel, which is designed such that it delivers a quantity of fuel per unit of time, which is dependent on the speed of the diesel engine (2) with which the particle filter (10) is associated,
characterized in that
d) the fuel pumping device (30) has a plurality of fuel pumps (34; 36; 38; 40) which each have a conveyed quantity per unit of time, which is dependent on the speed of the diesel engine (2); and
e) the number of fuel pumps (34; 36; 38; 40) currently in operation is controlled at least in dependence on the load condition of the diesel engine (2).

2. An apparatus according to Claim 1, characterized in that the fuel pumps (34; 36; 38; 40) each have a conveyed quantity which is substantially proportional to the speed of the diesel engine (2).

3. An apparatus according to Claim 1 or 2, characterized in that the fuel pumps (34; 36; 38; 40) are electromagnetically driven metering pumps.

4. An apparatus according to one of Claims 1 to 3, characterized in that the device for supplying the burner with combustion air has a compressor (20) designed such that it delivers a quantity of combustion air dependent on the speed of the diesel engine (2) with which the particle filter (10) is associated.

5. An apparatus according to Claim 4, characterized in that the delivered quantity of combustion air is substantially proportional to the speed of the diesel engine (2).

6. An apparatus according to one of Claims 4 and 5, characterized in that the compressor (20) is in a mechanical drive relationship with the diesel engine (2).

7. An apparatus according to one of Claims 1 to 6, characterized by a controllable valve (24) for controlling the quantity of combustion air which flows to the burner (12) per unit of time.

8. An apparatus according to one of Claims 1 to 7, characterized by an electrical control (50) which, during operation of the burner (12), in dependence on the gas temperature in the region of the particle filter (10) influences the number of fuel pumps (34, 36, 38, 40) currently in operation and/or the conveyed quantity from the fuel pumps (34; 36; 38; 40) and/or the position of the combustion air quantity valve (24).

## Revendications

1. Dispositif pour la régénération thermique de filtres à particules (10) pour les gaz d'échappement de moteurs Diesel, présentant :
a) un brûleur (12) pour chauffer le filtre à particules (10) pendant sa régénération ;
b) un dispositif (20) pour alimenter le brûleur (12) en air de combustion ;
c) un dispositif de pompe à combustible (30) pour alimenter le brûleur (12) en combustible, qui est réalisé de manière à fournir une quantité de combustible par unité de temps en fonction du régime du moteur Diesel (2) auquel est associé le filtre à particules (10),
caractérisé en ce que
d) le dispositif de pompe à combustible (30) présente plusieurs pompes à combustible (34 ; 36 ; 38 ; 40) qui ont chacune un refoulement par unité de temps en fonction du régime du moteur Diesel (2) ;
e) et en ce que le nombre de pompes à combustible (34 ; 36 ; 38 ; 40) en fonctionnement est commandé au moins en fonction de l'état de charge du moteur Diesel (2).

2. Dispositif selon la revendication 1, caractérisé en ce que les pompes à combustible (34 ; 36 ; 38 ; 40) ont chacune un refoulement essentiellement proportionnel au régime du moteur Diesel (2).

3. Dispositif selon la revendication 1 ou 2, caractérisé en ce que les pompes à combustible (34 ; 36 ; 38 ; 40) sont des pompes de dosage à commande électromagnétique.

4. Dispositif selon l'une des revendications 1 à 3, caractérisé en ce que le dispositif pour alimenter le brûleur en air de combustion présente un compresseur (20) réalisé de manière à fournir une quantité d'air de combustion en fonction du régime du moteur Diesel (2) auquel est associé le filtre à particules (10).

5. Dispositif selon la revendication 4, caractérisé en ce que la quantité d'air de combustion fournie est essentiellement proportionnelle au régime du moteur Diesel (2).

6. Dispositif selon la revendication 4 ou 5, caractérisé en ce que le compresseur (20) est en liaison d'entraînement mécanique avec le moteur Diesel (2).

7. Dispositif selon l'une des revendications 1 à 6, caractérisé par un clapet (24) pour commander la quantité d'air de combustion arrivant dans le brûleur (12) par unité de temps.

8. Dispositif selon l'une des revendications 1 à 7, caractérisé par une commande électrique (50) qui, pendant que le brûleur (12) fonctionne, influe sur le nombre de pompes à combustible (34, 36, 38, 40) qui fonctionnent précisément à ce moment-là et/ou sur le refoulement des pompes à combustible (34, 36, 38, 40) et/ou sur la position du clapet (24) pour la quantité d'air de combustion en fonction de la température des gaz qui se trouvent dans la zone du filtre à particules (10).
